# EUROPÄISCHE PATENTSCHRIFT

(11) **EP 0 969 935 B1**
(45) Veröffentlichungstag und Bekanntmachung des Hinweises auf die Patenterteilung: **28.08.2002**
(21) Anmeldenummer: 98916954.5
(22) Anmeldetag: 16.03.1998
(51) Int. Cl.: B07C 3/14

(54) **VERFAHREN ZUM ERKENNEN VON ZEICHEN UND SCHRIFT AUF DER OBERFLÄCHE VON POSTGUT**
METHOD FOR RECOGNIZING SYMBOLS AND CHARACTERS ON THE SURFACE OF MAIL CONSIGNMENTS
PROCEDE POUR DETECTER DES SIGNES ET DES CARACTERES A LA SURFACE D'ENVOIS POSTAUX

(30) Priorität: 27.03.1997 EP 97105301
(43) Veröffentlichungstag der Anmeldung: 12.01.2000
(73) Patentinhaber: SIEMENS AKTIENGESELLSCHAFT, 80333 München (DE)
(72) Erfinder: GRUND, Hans-Joachim, D-91056 Erlangen (DE)
(86) Internationale Anmeldenummer: EP9801500
(87) Internationale Veröffentlichungsnummer: WO98043751

(56) Entgegenhaltungen:
- EP-A- 0 647 479
- DE-A- 3 942 932
- DE-C- 19 532 842
- US-A- 5 581 637

## Beschreibung

Verfahren zum Erkennen von Zeichen und Schrift auf der Oberfläche von Postgut

Die Erfindung bezieht sich auf ein Verfahren und eine Einrichtung zum Erkennen von Zeichen und Schrift auf der Oberfläche von Postgut, insbesondere Paketen, mit Hilfe einer elektronischen Kamera.

In modernen Einrichtungen zur Postgutverteilung wird mit Hilfe von elektronischen Zeilenbildkameras die Postgutoberfläche gescannt und aus detektierten Zeichen, beispielsweise bereits vorliegendem Barcodezeichen, und aus erkannter Schrift kann dann die Adresse des Empfängers entweder automatisch oder bedarfsweise an einem Bildschirmarbeitsplatz generiert werden (DE-OS 195 32 757). Entsprechend dieser Adresse wird dann das Postgut weitgehend automatisiert weiterverteilt, wozu zweckmäßigerweise eine Barcode-Etikettierung oder Beschriftung auf dem Postgut vorgenommen wird, wenn diese nicht bereits vorhanden ist.

Zeilenbildkameras, die im Regelfall nur im industriellen Bereich verwendet werden, sind gegenüber handelsüblichen Videokameras relativ teuere Geräte. Handelsübliche Videokameras sind jedoch aufgrund ihrer Auflösung nicht ohne weiteres geeignet, bei der Zeichen- und Schrifterkennung von Postgut eingesetzt zu werden.

Aufgabe der Erfindung ist es, ein Verfahren und eine Einrichtung der eingangs genannten Art so auszubilden, daß mit kostengünstigen Videokameras eine Zeichen- und Schrifterkennung auf der Oberfläche von Postgut, insbesondere Paketen, ermöglicht wird.

Gemäß der Erfindung wird dies für ein Verfahren der eingangs genannten Art dadurch gelöst, daß als Kamera eine Videokamera zum Aufnehmen eines gegenüber der erfaßbaren Oberfläche relativ kleinen Betrachtungsfeldes verwendet wird und daß über eine Drehspiegelanordnung zwischen der Videokamera und dem Postgut die Betrachtungsfelder über die Oberfläche geführt werden.

Dadurch, daß durch eine Mehrachssteuerung der Drehspiegelanordnung oder durch einen mechanischen Vorschub des Postugtes und durch eine Einachssteuerung der Drehspiegelanordnung die Betrachtungsfelder kachelartig auf der Oberfläche plaziert werden, ist sozusagen in wenigen Schnappschüssen ein komplettes Abbild des Postgutes möglich. Ein Zusammensetzen der einzelnen Betrachtungsfelder zu einem Gesamtbild ist durch handelsübliche Software heutzutage problemlos zu erreichen.

Dadurch, daß über eine Meßeinrichtung die Entfernung zwischer der Oberfläche des jeweiligen Postgutes und der Videokamera ermittelt wird und daß daraus der Kachelversatz bestimmt wird, werden unnötig breite Überschneidungszonen der einzelnen Betrachtungsfelder verhindert.

Eine weitere Ausbildung des Verfahrens gemäß der Erfindung ist dadurch gekennzeichnet, daß das kachelartig zusammengesetzte Gesamtbild in der durch die Videokamera ermöglichten hohen Auflösung und einer demgegenüber geringeren Auflösung gespeichert wird, daß dann im durch die geringere Auflösung gegebene Gesamtbild das Vorhandensein von Schrift und Zeichen untersucht wird, daß dann die relevanten Bildausschnitte ausgewählt werden und daß daraufhin mit der hohen Auflösung Schriftzeichen automatisch oder bedienergestützt analysiert werden. Dadurch sind die Datenmengen, die zum Auffinden von Feldern mit Zeichen und Schrift zu analysieren sind, relativ gering gehalten, wodurch dieser Prozeß technisch schnell erfolgen kann, während dort, wo eine eingehende Analyse von Schrift und Zeichen notwendig ist, ein qualitativ hochwertiges Bild zur Verfügung steht.

Das Auslösen der Videokamera kann technisch einfach dadurch realisiert werden, daß in einer Startposition der Videokamera das Erscheinen einer Vorderkante des jeweiligen Postgutes ermittelt und dann die Videokamera über die Oberfläche des jeweiligen Postgutes geführt wird, bis durch Erscheinen der Hinterkante des jeweiligen Postgutes die Rückkehr in die Startposition veranlaßt wird.

Die erfindungsgemäße Aufgabe wird für eine Einrichtung der eingangs genannten Art durch die vorliegende Erfindung dadurch gelöst, daß als Kamera eine Videokamera zum Aufnehmen eines gegenüber der erfaßbaren Oberfläche relativ kleine Betrachtungsfelder vorgesehen ist und daß über eine Drehspiegelanordnung zwischen der Videokamera und dem Postgut die Betrachtungsfelder über die Oberfläche führbar sind.

Dadurch, daß durch eine Mehrachssteuerung der Drehspiegelanordnung oder durch einen mechanischen Vorschub des Postgutes und durch eine Einachssteuerung der Drehspiegelanordnung die Betrachtungsfelder kachelartig auf der Oberfläche plazierbar sind, ergibt sich der bereits oben geschilderte schnelle Aufbau eines Bildes der Oberfläche des Postgutes.

Auch über die Vorteile einer Meßeinrichtung zur Feststellung von Entfernung zwischen Oberfläche des jeweiligen Postgutes und Videokamera wurde bereits berichtet.

Eine weitere Ausbildung der erfindungsgemäßen Einrichtung ist dadurch gekennzeichnet, daß dem Strahlengang der Videokamera ein vorzugsweise rechtwinklig ablenkbarer Umlenkspiegel vorgesehen ist. Durch ein hiermit ermöglichtes Abknicken des Strahlenganges wird das Bauvolumen der Einrichtung äußerst gering gehalten.

Ein Ausführungsbeispiel der Erfindung ist in der Zeichnung dargestellt und wird im folgenden näher erläutert. Dabei zeigen;
FIG 1 eine sogenannte "intelligente Entladezone" und
FIG 2 weitere signifikante Einzelheiten der Erfindung.

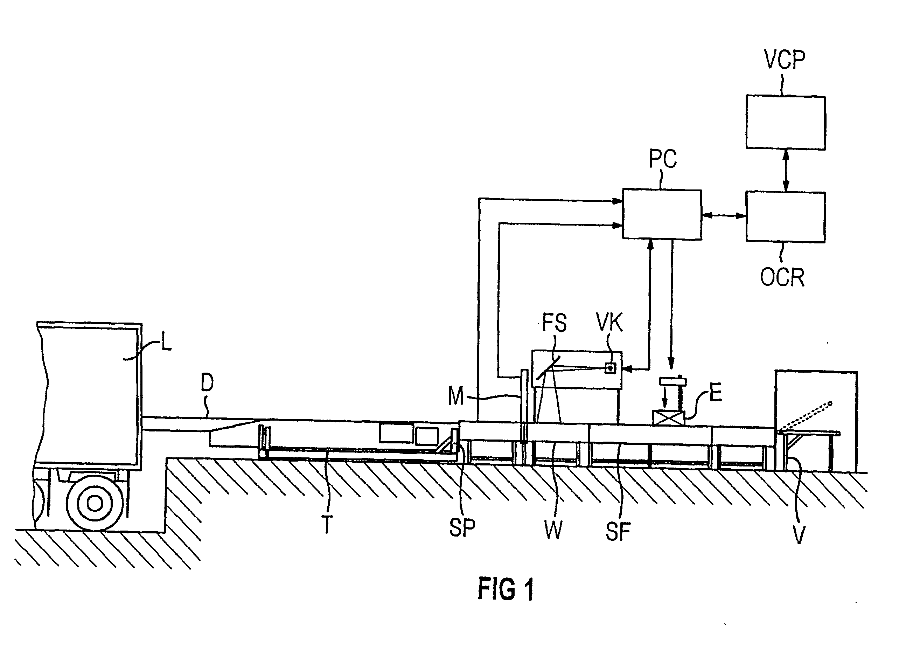

In der Darstellung gemäß FIG 1 ist eine sogenannte "intelligente Entladezone" gezeigt, bei der von einem Lastkraftwagen L Postpakete über eine Doppelauflage D auf ein Teleskopband T verbracht werden. Von dort gelangen die Pakete über einen Seitenpositionierer SP und einen Meßrahmen M, bei dem beispielsweise durch Lichtschranken die Höhe der Pakete festgestellt wird, in den Bereich einer Waage W, von wo aus sie über einen Stauförderer SF an einen Vorsorter V gelangen, von dem aus die weitere Verteilung innerhalb eine Verteilzentrums für Pakete erfolgt.

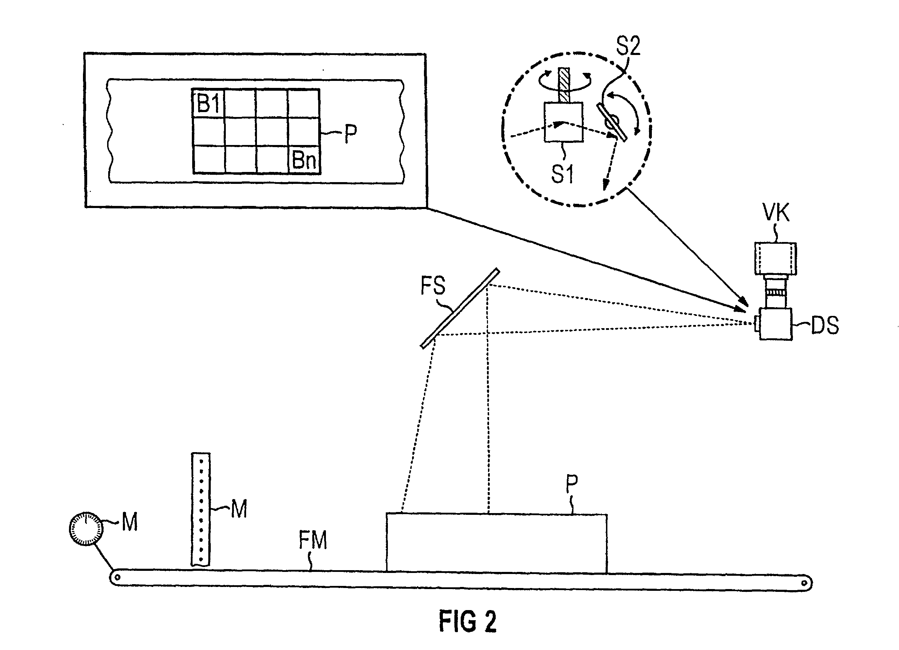

Damit diese Verteilung automatisch erfolgen kann, ist ein Paketleser vorhanden. Dieser weist eine handelsübliche Videokamera VK mit einer Auflösung von beispielsweise 782 mal 582 Bildpunkten auf, diese Videokamera VK wird über einen festen Spiegel FS, der einen Umlenkspiegel darstellt, auf die Oberfläche der vom Lastkraftwagen L angelieferten Pakete gerichtet. Da das Betrachtungsfeld der Videokamera VK aber gegenüber der Oberfläche der Pakete relativ klein ist, ist die Videokamera VK, wie in der Darstellung gemäß FIG 2 im einzelnen gezeigt ist, über einen Drehspiegel DS und den festen Spiegel FS auf die Pakete, so auf ein gezeigtes Paket P gerichtet. Der Drehspiegel DS ist im oberen Teil der Darstellung gemäß FIG 2 noch einmal vergrößert abgebildet, und so ist ersichtlich, daß er zwei bewegliche Spiegel S1 und S2 aufweist, mit denen das Betrachtungsfeld über die gesamte Oberfläche des Paketes P gelenkt werden kann. Auch dies zeigt die Darstellung gemäß FIG 2 durch ein gesondertes Feld im oberen Bildbereich, hierbei ist ersichtlich, wie Betrachtungsfelder B1 bis Bn über die Oberfläche des Paketes P verteilt werden.

Die Verwendung von zwei beweglichen Spiegeln S1 und S2 ermöglicht es auch dann, wenn ein Paket P stillsteht, dessen gesamte Oberfläche aus den gezeigten einzelnen kachelartigen Betrachtungsfeldern B1 bis Bn zusammenzusetzen. Prinzipiell ist es aber auch möglich, daß der Drehspiegel DS nur einen einzigen beweglichen Spiegel aufweist, der dann die einzelnen Betrachtungsfelder B1 bis Bn zeilenweise erfaßt, wobei der spaltenweise Aufbau dadurch erreicht wird, daß jeweils dann eine neue Zeile ausgelöst wird, wenn das Fördermittel, beispielsweise das Fördermittel FM, das Paket P um die Breite eines Betrachtungsfeldes weitergefördert hat.

Die Aufnahme eines stehenden Paketes ist beim Einsatz von Rollenbahnen vorzuziehen, da sich kleine Objekte, während sie von Rolle zu Rolle bewegt werden, unruhig verhalten. Dies ist also der Fall, in dem zwei Drehspiegel für das Abtasten des Bildes erforderlich sind, von den der eine für die Breite, der andere für die Länge der Objektoberfläche zuständig ist. Der letztere Spiegel simmuliert dabei quasi die Transportbewegung.

Beim Einsatz eines gleichmäßig fördernden Bandförderers ist diese Arbeitsweise zwingend erforderlich, jedoch kann auch hier der Einsatz von zwei Drehspiegeln günstig sein, wobei dann die Bewegung des für die Länge zuständigen Spiegels in Abhängigkeit von der Transportbandbewegung variiert werden müßte.

Die Bilderfassung kann immer an der gleichen Startposition der Videokamera VK erfolgen. Beispielsweise könnte jeweils am Ort des Betrachtungsfeldes B1 (FIG 2) begonnen werden. Dabei kann die Bildverarbeitung durch das Auftreten der Vorderkante eines Paketes, so des Pakets P, im Betrachtungsfeld B1 gestartet werden. Auf der gegenüberliegenden Längsseite würde dann der Abtastvorgang durch die Erfassung der rückwärtigen Kante des Paketes beendet. Als zusätzliches Kriterium kann auch das gleichzeitige Erfassen des Erscheinens der Textur des jeweiligen Fördermittels FM berücksichtigt werden.

Die Betrachtungsfelder B1 bis Bn werden einmal in voller Auflösung zusammenhängend im Arbeitsspeicher eines Personalcomputers PC (FIG 1) abgelegt. Ferner kann ein zweites Bild mit einstellbarer geringerer Auflösung im Arbeitsspeicher des Personalcomputers PC gespeichert werden. Ein Analyseprogramm einer Zeichenerkennungseinrichtung OCR setzt zunächst auf dem unscharfen Bild auf, bestimmt dann die für die Schrift und Zeichenerkennung relevanten Bildbereiche und untersucht diese Bildbereiche anhand des hochaufgelösten Bildes. Automatisch erkannte Schrift und automatisch erkannte Zeichen, so auch Barcodezeichen, können dann dazu dienen, daß gesteuert vom Personalcomputer PC eine Etikettiereinrichtung E das jeweilige Paket markiert. Für den Fall, daß die automatische Erkennung OCR versagt, kann über einen visuellen Codierplatz VCP durch einen Bediener die Detektion von Schrift und Zeichen erfolgen und über eine der Übersichtlichkeit halber nicht dargestellte Bedieneinheit können dem Personalcomputer PC die entsprechenden Informationen eingegeben werden.

Da bei relativ hohen Paketen aufgrund des radialen Strahlenganges der Videokamera VK die Betrachtungsfelder klein gegenüber den Betrachtungsfeldern bei relativ flachen Paketen sind, andererseits aber die Betrachtungszonen zwar unbedingt mindestens zusammenstoßen sollen, jedoch nicht unnötig breit überlappen sollen, wird über den Meßrahmen M ein Höhensignal für das jeweils zu bearbeitende Paket gewonnen und entsprechend diesem Höhensignal erwirkt der Personalcomputer PC auf den Drehspiegel DS der Videokamera VK ein.

Die Wirkrichtung der verschiedenen Komponenten sind in der Darstellung gemäß FIG 1 jeweils durch Ein- bzw. Zweirichtungspfeile angedeutet.

Prinzipiell ist auch die Verwendung der erfindungsgemäßen Einrichtung für anderes Stückgut als Postpaket verwendbar, so wäre beispielsweise der Teilefluß in einem Produktionssystem in ähnlicher Weise verfolgbar.

## Patentansprüche

1. Verfahren zum Erkennen von Zeichen und Schrift auf der Oberfläche von Postgut, insbesondere Paketen, mit Hilfe einer elektronischen Kamera, **dadurch gekennzeichnet, daß** als Kamera eine Videokamera (VK) zum Aufnehmen eines gegenüber der erfaßbaren Oberfläche relativ kleinen Betrachtungsfeldes (B1-Bn) verwendet wird und daß über eine Drehspiegelanordnung (DS) zwischen der Videokamera (VK) und dem Postgut (P) die Betrachtungsfelder (B1-Bn) über die Oberfläche geführt werden.

2. Verfahren nach Anspruch 1, **dadurch gekennzeichnet, daß** durch eine Mehrachssteuerung (S1,S2) der Drehspiegelanordnung (DS) oder durch einen mechanischen Vorschub des Postgutes (P) und durch eine Einachssteuerung der Drehspiegelanordnung (DS) die Betrachtungsfelder (B1-Bn) kachelartig auf der Oberfläche plaziert werden.

3. Verfahren nach einem der vorstehenden Ansprüche, **dadurch gekennzeichnet, daß** über eine Meßeinrichtung (M) die Entfernung zwischen der Oberfläche des jeweiligen Postgutes (P) und der Videokamera (VK) ermittelt wird und daß daraus der jeweilige Kachelversatz bestimmt wird.

4. Verfahren nach einem der vorstehenden Ansprüche, **dadurch gekennzeichnet, daß** das kachelartig zusammengesetzte Gesamtbild in der durch die Videokamera (VK) ermöglichten hohen Auflösung und in einer demgegenüber geringeren Auflösung gespeichert wird, daß dann im durch die geringere Auflösung gegebenen Gesamtbild das Vorhandensein vom Schrift und Zeichen untersucht wird, daß dann die relevanten Bildausschnitte ausgewählt werden und daß daraufhin mit der hohen Auflösung Schrift und Zeichen automatisch oder bedienergestützt analysiert werden.

5. Verfahren nach einem der vorstehenden Ansprüche, **dadurch gekennzeichnet, daß** in einer Startposition der Videokamera (VK) das Erscheinen einer Vorderkante des jeweiligen Postgutes (P) ermittelt wird und dann die Videokamera (VK) über die Oberfläche des jeweiligen Postgutes (P) geführt wird, bis durch Erscheinen der Hinterkante des jeweiligen Postgutes (P) die Rückkehr in die Startposition veranlaßt wird.

6. Einrichtung zum Erkennen von Zeichen und Schrift auf der Oberfläche von Postgut, insbesondere Paketen, mit Hilfe einer elektronischen Kamera, **dadurch gekennzeichnet, daß** als Kamera eine Videokamera zum Aufnehmen eines gegenüber der erfaßbaren Oberfläche relativ kleinen Betrachtungsfeldes vorgesehen ist und daß über eine Drehspiegelanordnung zwischen der Videokamera und dem Postgut die Betrachtungsfelder über die Oberfläche führbar sind.

7. Einrichtung nach Anspruch 6, **dadurch gekennzeichnet, daß** durch eine Mehrachssteuerung (S1,S2) der Drehspiegelanordnung (DS) oder durch einen mechanischen Vorschub des Postgutes (P) und durch eine Einachssteuerung der Drehspiegelanordnung (DS) die Betrachtungsfelder (B1-Bn) kachelartig auf der Oberfläche plazierbar sind.

8. Einrichtung nach einem der Ansprüche 6 oder 7, **dadurch gekennzeichnet, daß** über eine Meßeinrichtung (M) die Entfernung zwischen der Oberfläche jeweiligen Postgutes (P) und der Videokamera (VK) bestimmbar ist und daß daraus der jeweilige Kachelversatz bestimmbar ist.

9. Einrichtung nach einem der Ansprüche 6 bis 8, **dadurch gekennzeichnet, daß** im Stahlengang der Videokamera (VK) ein vorzugsweise rechtwinklig ablenkender Umlenkspiegel (FS) vorgesehen ist.

## Claims

1. Method for recognizing symbols and characters on the surface of mail consignments, in particular packages, with the aid of an electronic camera, **characterized in that** the camera used is a video camera (VK) for recording a field of view (B1-Bn) that is small relative to the detectable surface, and **in that** the fields of view (B1-Bn) are guided over the surface by a rotary mirror arrangement (DS) between the video camera (VK) and the mail consignment (P).

2. Method according to Claim 1, **characterized in that** by means of multi-axis control (S1, S2) of the rotary mirror arrangement (DS), or by means of mechanical advance of the mail consignment (P) and by means of single-axis control of the rotary mirror arrangement (DS), the fields of view (B1-Bn) are placed in the manner of tiles on the surface.

3. Method according to one of the preceding claims, **characterized in that** the distance between the surface of the respective mail consignment (P) and the video camera (VK) is determined by a measuring device (M), and the respective tile offset is determined therefrom.

4. Method according to one of the preceding claims, **characterized in that** the overall image, composed in the manner of tiles, is stored at the high resolution permitted by the video camera (VK) and at a comparatively lower resolution, **in that** the presence of the characters and symbols are then investigated in the overall image provided by the lower resolution, **in that** the relevant image details are then selected and **in that** characters and symbols are then analyzed, automatically or with operator support, at the high resolution.

5. Method according to one of the preceding claims, **characterized in that**, in a starting position of the video camera (VK), the appearance of a leading edge of the respective mail consignment (P) is determined, and then the video camera (VK) is guided over the surface of the respective mail consignment (P) until, as a result of the trailing edge of the respective mail consignment (P) appearing, a return to the starting position is initiated.

6. Apparatus for recognizing symbols and characters on the surface of mail consignments, in particular packages, with the aid of an electronic camera, **characterized in that** the camera provided is a video camera for recording a field of view that is small relative to the detectable surface, and **in that** the fields of view are guided over the surface by a rotary mirror arrangement between the video camera and the mail consignment.

7. Apparatus according to Claim 6, **characterized in that** by means of multi-axis control (S1, S2) of the rotary mirror arrangement (DS), or by means of mechanical advance of the mail consignment (P) and by means of single-axis control of the rotary mirror arrangement (DS), the fields of view (B1-Bn) are placed in the manner of tiles on the surface.

8. Apparatus according to either of Claims 6 and 7, **characterized in that** the distance between the surface of the respective mail consignment (P) and the video camera (VK) can be determined by a measuring device (M), and the respective tile offset can be determined therefrom.

9. Apparatus according to one of Claims 6 to 8, **characterized in that** a deflection mirror (FS) which preferably deflects at right angles is provided in the beam path of the video camera (VK).

## Revendications

1. Procédé pour la reconnaissance de signes et de caractères sur la surface d'envois postaux, notamment de paquets, à l'aide d'une caméra électronique, **caractérisé par le fait qu'**on utilise comme caméra une caméra vidéo (VK) pour l'enregistrement d'un champ d'observation (B1 à Bn) relativement petit par rapport à la surface détectable et qu'on guide les champs d'observation (B1 à Bn) au-dessus de la surface par l'intermédiaire d'un dispositif de miroir tournant (DS) entre la caméra vidéo (VK) et l'envoi postal (P).

2. Procédé selon la revendication 1, **caractérisé par le fait que** les champs d'observation (B1 à Bn) sont placés comme des carreaux sur la surface par une commande à plusieurs axes (S1, S2) du dispositif de miroir tournant (DS) ou par une avance mécanique de l'envoi postal (P) et une commande à un axe du dispositif de miroir tournant (DS).

3. Procédé selon l'une des revendications précédentes, **caractérisé par le fait qu'**on détermine la distance entre la surface de l'envoi postal respectif (P) et la caméra vidéo (VK) par l'intermédiaire d'un dispositif de mesure (M) et qu'on détermine à partir de là le décalage respectif des carreaux.

4. Procédé selon l'une des revendications précédentes, **caractérisé par le fait qu'**on mémorise l'image totale composée de carreaux avec la grande résolution permise par la caméra vidéo (VK) et avec une résolution plus petite, qu'on examine ensuite la présence de caractères et de signes dans l'image totale donnée par la petite résolution, qu'on sélectionne ensuite les extraits d'image intéressants et qu'on analyse enfin les caractères et les signes, automatiquement ou à l'aide d'un opérateur, dans l'image avec la grande résolution.

5. Procédé selon l'une des revendications précédentes, **caractérisé par le fait qu'**on détermine l'apparition d'une arête avant de l'envoi postal respectif (P) dans une position de départ de la caméra vidéo (VK) et qu'on guide ensuite la caméra vidéo (VK) au-dessus de la surface de l'envoi postal respectif (P) jusqu'à ce que le retour dans la position de départ soit provoqué par l'apparition de l'arête arrière de l'envoi postal respectif (P).

6. Dispositif pour la reconnaissance de signes et de caractères sur la surface d'envois postaux, notamment de paquets, à l'aide d'une caméra électronique, **caractérisé par le fait qu'**une caméra vidéo est prévue comme caméra pour l'enregistrement d'un champ d'observation relativement petit par rapport à la surface détectable et que les champs d'observation peuvent être guidés au-dessus de la surface par l'intermédiaire d'un dispositif de miroir tournant entre la caméra vidéo et l'envoi postal.

7. Dispositif selon la revendication 6, **caractérisé par le fait que** les champs d'observation (B1 à Bn) sont placés comme des carreaux sur la surface par une commande à plusieurs axes (S1, S2) du dispositif de miroir tournant (DS) ou par une avance mécanique de l'envoi postal (P) et une commande à un axe du dispositif de miroir tournant (DS).

8. Dispositif selon l'une des revendications 6 ou 7, **caractérisé par le fait que** la distance entre la surface de l'envoi postal respectif (P) et la caméra vidéo (VK) peut être déterminée par l'intermédiaire d'un dispositif de mesure (M) et que le décalage respectif des carreaux peut être déterminé à partir de là.

9. Dispositif selon l'une des revendications 6 à 8, **caractérisé par le fait qu'**il est prévu dans la marche des rayons de la caméra vidéo (VK) un miroir de déviation (FS) qui dévie de préférence en angle droit.
